# EUROPÄISCHE PATENTSCHRIFT

(11) **EP 2 403 346 B1**
(45) Veröffentlichungstag und Bekanntmachung des Hinweises auf die Patenterteilung: **23.07.2014**
(21) Anmeldenummer: 10718058.0
(22) Anmeldetag: 08.03.2010
(51) Int. Cl.: A22C 11/00

(54) **VORRICHTUNG UND VERFAHREN ZUM TRENNEN VON WURSTKETTEN**
DEVICE AND METHOD FOR DIVIDING SAUSAGE STRANDS
DISPOSITIF ET PROCÉDÉ POUR DIVISER DES CHAPELETS DE SAUCISSES

(30) Priorität: 06.03.2009 DE 102009011555
(43) Veröffentlichungstag der Anmeldung: 11.01.2012
(73) Patentinhaber: Inotec GmbH Maschinenentwicklung und Vertrieb, 72770 Reutlingen (DE)
(72) Erfinder: DOMLATIL, Miroslaw, 72766 Reutlingen (DE)
(74) Vertreter: Arat, Dogan
(86) Internationale Anmeldenummer: PCT/EP2010/001423
(87) Internationale Veröffentlichungsnummer: WO 2010/099981

(56) Entgegenhaltungen:
- DE-A1- 2 912 247
- DE-A1- 4 307 637
- FR-A1- 2 908 598
- US-A1- 2004 052 900
- US-A1- 2007 295 222

## Beschreibung

Die Erfindung betrifft eine Vorrichtung zum Trennen von Wurstketten, die eine Zuführeinrichtung zum Zuführen von Wurstketten aufweist, der eine Trenneinrichtung zum Trennen der Wurstketten in einzeine Wurstkettenabschnitte bzw. Würste zugeordnet ist, sowie ein entsprechendes Verfahren.

### STAND DER TECHNIK

Aus der FR 2 908 598 A1 ist ferner ein Verfahren bekannt, bei dem mehr als zwei koextrudierte Wurststränge von mehr als zwei Trenneinrichtungen gleichzeitig/parallel in separate Würste getrennt werden.

Würste werden heute aber so hergestellt, dass ein Darm, sei es Natur- oder Kunststoffdarm, mit dem entsprechenden Wurstbrät in Wurstportionen abgefüllt wird. Zwischen den einzelnen Portionen erfolgt ein Drehen des Darms und/oder ein Einsetzen von Clipsen, durch welche die einzelnen Würste voneinander abgeteilt werden. Hierdurch entsteht eine Wurstkette, von der, beispielsweise zum automatischen Verpacken, eine bestimmte Anzahl von Wurstkettenabschnitten bzw. einzelnen Würsten abgeschnitten werden.

Aus DE 43 07 637 A1 ist eine Vorrichtung zum Trennen von einzelnen Würsten von einer Wurstkette an einer Schneidstelle mittels eines auf einer Welle eines Motors sitzenden Messers bekannt, wobei ein Sensor vorgeschaltet ist, der einen Lichtvorhang erzeugt.

Nachteilig bei dieser Vorrichtung ist, dass jeweils nur eine einzelne Wurstkette in ihre einzelnen Wurstkettenabschnitte bzw. Würste getrennt werden kann. Um mehrere Wurstketten parallel/gleichzeitig zu trennen, ist es üblich, mehrere dieser Vorrichtungen bereitzustellen. D.h., mehrere Geräte werden von mehreren Bedienern bedient und ggf. programmiert sowie danach auch gleichzeitig überwachen. Dies weist die Nachteile auf, dass mehrere dieser Vorrichtungen angeschafft werden müssen und jeweils ein Programmieren jeder einzelnen Vorrichtung durchgeführt werden muss. Ferner wird eine gleichzeitige Überwachung dieser Vorrichtungen für den Bediener erschwert, da diese oftmals an unterschiedlichen Standorten stehen, so dass sich der Bediener auf mehrere Standorte gleichzeitig konzentrieren muss.

### AUFGABE

Aufgabe der Erfindung ist es, die o.g. Nachteile zu vermeiden oder wenigstens abzumindern.

### LÖSUNG DER AUFGABE

Zur Lösung der Aufgabe führt, dass in der Vorrichtung eine n-fache Anzahl von Trenneinrichtungen nebeneinander integriert ist, wobei n ≥2 ist und jede Trenneinrichtung mit einer Sensoreinrichtung, die die Verbindungsstellen der Wurstketten detektiert, zum Trennen der Wurstketten an den detektierten Verbindungsstellen zusammenwirkt

Die Bereitstellung von mehr als einer Trenneinrichtung, also wenigstens zwei Trennelnrichtungen, hat den Vorteil, dass belspielsweise nur ein Antrieb für die Trenneinrichtung vorgesehen wird. Ferner bieten mehrere Trenneinrichtungen die Mäglichkeit, parallel mehrere Wurstketten zu bearbeiten. Ausserdem brauchen bei gleichen Wurstketten-Typen, die jeweils in die gleichen Längenabschnitte getrennt werden sollen, die Trenneinrichtungen nicht jeweils separat programmiert zu werden. D.h. dieselbe Programmierung kann für eine n-fache Anzahl von Trenneinrichtungen verwendet werden.

Dadurch, dass mehrere Trenneinrichtungen über einen gemeinsamen Antrieb angetrieben werden, kann ausserdem eine kostengünstigere Vorrichtung hergestellt werden, da weniger Bauteile insgesamt notwendig sind.

In einer anderen Ausführungsform der Vorrichtung sind der jeweiligen Trenneinrichtung Bereitstelleinrichtungen vorgeschaltet, die für n-fache Wurstketten n-fache Abteilungen aufweisen, die im Wesentlichen parallel zueinander angeordnet sind. Dies hat den Vorteil, dass ein Bediener mehrere Wurstketten parallel bereitstellen kann, so dass weniger Personal notwendig ist.

Ferner ist durch die n-fache Anzahl von Bereitstellungseinrichtungen, die nebeneinander angeordnet sind, eine bessere Überwachung der Einrichtung möglich.

In einer bevorzugten Ausführungsform folgt jeder Bereitstelleinrichtung eine Zuführeinrichtung zum Zuführen der Wurstketten hin zu der jeweiligen Trenneinrichtung. Hiefür weist die Zuführeinrichtung ein Transportband auf, das um Umlenkrollen geführt ist.

Jede Trenneinrichtung weist eine ihr zugeordnete Sensoreinrichtung auf. Dies hat wiederum den Vorteil, dass mehrere Sensoreinrichtungen über eine einzelne Steuerung gesteuert werden können, was wiederum die Herstellungskosten der erfindungsgemässen Vorrichtung im Vergleich zu einer Vorrichtung nur mit einer Sensoreinrichtung und nur mit einer Trenneinrichtung herabsetzt.

In einer weiteren vorteilhaften Ausführungsform ist der Trenneinrichtung eine Abführeinrichtung nachgeschaltet. Bei der Abführeinrichtung kann es sich, wie bei der Zuführeinrichtung um ein Transportband handeln, das um Umlenkrollen geführt ist. Es sind jedoch auch andere Ausbildungen der Abführ- bzw. Zuführeinrichtungen denkbar. Wesentlich ist hierbei nur, dass eine ordentliche. Zuführung und Abführung der Wurstketten hin zu bzw. weg von der Trenneinrichtung ermöglicht wird.

Zur Lösung der Aufgabe führt auch ein Verfahren gemäss Anspruch 7, bei dem eine n-fache Anzahl von Wurstketten von n-fachen Trenneinrichtungen in separate Wurstkettenabschnitte bzw. Würste im Wesentlich parallel getrennt werden, wobei n ≥ 2 ist. Das erfindungsgemässe Verfahren stellt dieselben Vorteile, wie die erfindungsgemässe Vorrichtung bereit, nämlich dass mehrere n-fache Wurstketten mit ein und demselben Prozess in entsprechende Wurstkettenabschnitte bzw. Würste getrennt werden können, so dass eine damit verbundene Zeitersparnis bei einer besseren Überwachung einer einzelnen Vorrichtung erfolgen kann. So kann bei im wesentlichen identischen n-fachen Wurstketten dieselbe Programmierung für die n-fachen Trenneinrichtungen verwendet werden.

Bei dem erfindungsgemässen Verfahren werden n-fache Wurstketten n-fach bereitgestellt und auch n-fach zugeführt, wobei das Verfahren zur Steuerung der erfindungsgemässen Vorrichtung die Trenneinrichtung über eine Sensoreinrichtung derart steuert, dass die vorbestimmten Verbindungsstellen der einzelnen Würste bzw. Wurstkettenabschnitte detektiert werden können, so dass die Wurstketten an den detektierten Verbindungsstellen in die vorbestimmten/einprogrammierten Wurstkettenabschnitte bzw. in einzelne Würste getrennt werden können.

Die Vorrichtung kann mittels des Verfahrens derart eingestellt werden, dass die Wurstketten entweder einen Wurstkettenabschnitt mit einer vorbestimmten Anzahl von Würsten, in welchen Abschnitten die Würste miteinander verbunden bleiben, getrennt werden, oder dass die Wurstketten in einzelne Würste getrennt werden.

In einer vorteilhaften Ausführungsform können die n-fachen Trenneinrichtungen jedoch auch unterschiedlich programmiert werden, so dass die Trennung der einen Wurstketten an der ersten Trenneinrichtung an einer anderen Verbindungsstelle stattfindet wie bei der anderen Wurstkette an der zweiten Trenneinrichtung.

### FIGURENBESCHREIBUNG

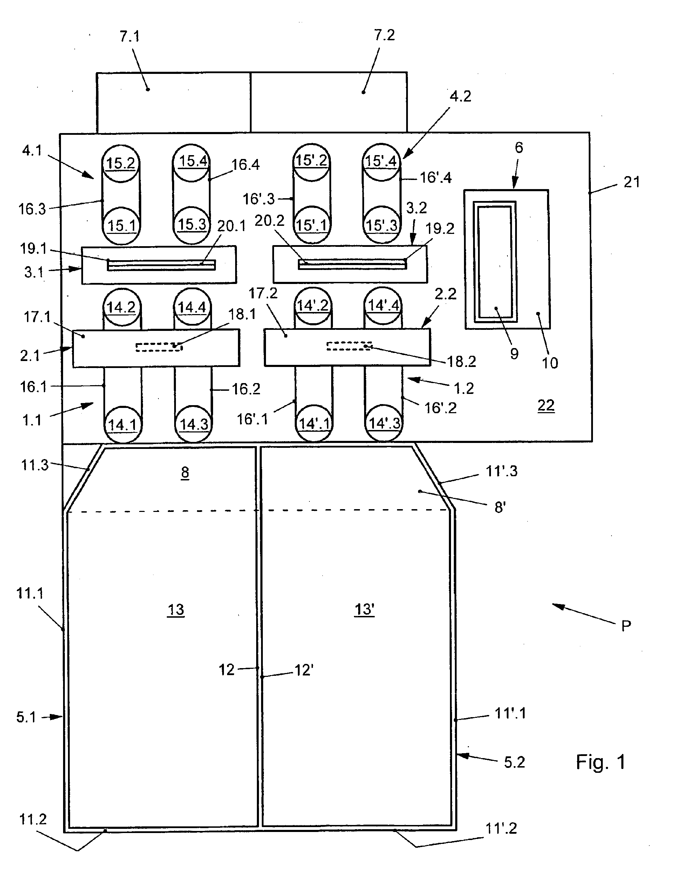

Weitere Vorteile, Merkmale und Einzelheiten der Erfindung ergeben sich aus der nachfolgenden Beschreibung eines bevorzugten Ausführungsbeispiels das in der Zeichnung in ihrer einzigen Figur 1 dargestellt ist. Diese zeigt eine Draufsicht einer erfindungsgemässen Vorrichtung zum Trennen von Wurstketten.

Wie in Figur 1 gezeigt, weist die erfindungsgemässe Vorrichtung P zum Trennen von Wurstketten eine Bereitstelleinrichtung 5.1, 5.2 auf, der eine Zuführeinrichtung 1.1, 1.2 nachgeschaltet ist, an der sich eine Sensoreinrichtung 2.1, 2.2 befindet, der eine Trenneinrichtung 3.1, 3.2 nachgeschaltet ist, auf die eine Abführeinrichtung 4.1, 4.2 folgt, an die ein Auslauf 7.1, 7.2 angrenzt.

Zum Trennen einer n-fachen Anzahl von Wurstketten kann die Vorrichtung P eine n-fache Anzahl von Einrichtungen X.1 bis X.n aufweisen, die nebeneinander bzw. parallel zueinander angeordnet sind, wobei X als Platzhalter für die Bezugszeichen 1 bis 7 steht.

In der bevorzugten Ausführungsform, die in Figur 1 gezeigt ist, ist die Vorrichtung P für eine 2-fache Anzahl von Wurstketten ausgelegt, die gleichzeitig/parallel in ihre separaten Wurstkettenabschnitte bzw. Würste getrennt werden sollen.

Die Bereitstelleinrichtungen 5.1 und 5.2, die Zuführeinrichtungen 1.1 und 1.2, die Sensoreinrichtungen 2.1 und 2.2, die Trenneinrichtungen 3.1 und 3.2, die Abführeinrichtungen 4.1, 4.2 und die Ausläufe 7.1 und 7.2 sind im wesentlichen parallel und/oder spiegelsymmetrisch nebeneinander angeordnet. Die Komponenten der Einrichtungen 1.1 bis 5.1 sind im wesentlichen identisch zu den Komponenten der Einrichtungen 1.2 bis 5.2 und mit gekennzeichnet.

Die Bereitstelleinrichtungen 5.1 und 5.2 weisen Seitenumfangswände 11.1 bis 11.3 bzw. 11'.1 bis 11'.3 sowie eine Trennwand 12 bzw. 12' auf. Die Trennwände 12 und 12' sind in dem bevorzugten Ausführungsbeispiel einstückig ausgebildet. Es ist jedoch auch vorstellbar, dass die Bereitstelleinrichtungen 5.1 und 5.2 separate Einrichtungen sind. Bevorzugt sind die Bereitstelleinrichtungen 5.1 und 5.2 auf Tischbeinen geständert und mittels einer nicht dargestellten Rollenvorrichtung verschiebbar. Die Wände 11.1, 11.2 und 12 bzw. 11'.1, 11'.2 und 12' umgeben jeweils einen Bodenbereich 13.1 bzw. 13.2 der jeweiligen Bereitstelleinrichtung 5.1 und 5.2 und umschliessen diesen im wesentlichen U-förmig. In den Bereitstelleinrichtungen 5.1 und 5.2 werden jeweils die zu trennenden Wurstketten bereitgestellt, d.h. derart eingelegt, dass die Zuführeinrichtungen 1.1 und 1.2 diese den Trenneinrichtungen 3.1 und 3.2 zuführen können.

An der Seite der Bereitstelleinrichtung 5.1 und 5.2, die der Zuführeinrichtung 2.1 bzw.2.2 zugewandt ist, ist ein Einlaufabschnitt 8 bzw. 8' vorgesehen. Im Bereich des jeweiligen Einlaufabschnitts 8, 8' ist die Seitenumfangswand 11.3 bzw. 11'.3 hin zu der Zugangsöffnung der jeweiligen Zuführeinrichtung 2.1 bzw. 2.2 geneigt, so dass eine Führung der einzelnen Wurstketten hin zu der Zuführeinrichtung 1.1 bzw. 1.2 erleichtert wird. Der Bodenbereich des Einlaufabschnitts 8, 8' kann auch leicht nach oben oder nach unten geneigt sein, je nachdem, ob die Bodenwand 13.1, 13.2 oberhalb oder unterhalb des Niveaus einer Deckenwand 22 des Gehäuses 21 der Vorrichtung P angeordnet ist. Die geneigte Anordnung verbessert die Führung der zu trennenden Wurstketten hin zu den Zuführeinrichtungen 1.1 bzw. 1.2.

Die Zuführeinrichtungen 1.1 und 1.2 weisen im wesentlichen Umlenkrollen 14.1 bis 14.4 auf, um die jeweils paarweise ein Transportband 16.1 bzw. 16.2 gelegt ist. Die Zuführeinrichtung 1.1 ist im Wesentlichen baugleich mit der Zuführeinrichtung 1.2, wobei die einzelnen Umlenkrollen daher mit 14.1' bis 14.4' und das Transportband mit 16.1' und 16.2' angezeigt sind.

Zwischen den Umlenkrollen 14.1 und 14.2 bzw. 14.3 und 14.4 ist eine Sensoreinrichtung 2.1 und zwischen den Umlenkrollen 14'.1 und 14'.2 bzw. 14'.3 und 14'.4. 2.2 ist eine Sensoreinrichtung 2.2 vorgesehen, die jeweils einen Sensor 18.1 bzw. 18.2 aufweisen. Die Sensoren 18.1 und 18.2 sind jeweils in einer Sensorbrücke 17.1 bzw. 17.2 angeordnet ist. Die Sensorbrücken 17.1 und 17.2 können jedoch auch einstückig ausgebildet sein, so dass nur eine Sensorbrücke vorgesehen ist.

Der Sensor 18.1 bzw. 18.2 erzeugt einen Lichtvorhang, mit dem die Verbindungsstellen der einzelnen Würste in den Wurstketten detektiert werden, wobei die von der Sensoreinheit ermittelten Signale von einer nicht dargestellten Steuerung verarbeitet werden, die eine der Sensoreinrichtung nachfolgende Trenneinrichtung 3 zum Steuern derselben verwendet.

Die Steuerung steuert die Zuführeinrichtungen 1.1, 1.2, die Trenneinrichtungen 3.1, 3.2 und die Abführeinrichtung 4.1, 4.2 mit Hilfe der Signale der Sensoreinrichtungen 2.1, 2.2 und die Antriebe der jeweiligen Einrichtungen, so dass die Wurstketten in die gewünschten Längenabschnitte getrennt werden.

Die Trenneinrichtungen 3.1 und 3.2 weisen einen Messerschlitz 19.1 bzw. 19.2 auf, aus dem ein rotierbares Trennmesser 20.1 bzw. 20.2 derart herausragt, so dass die detektierten Verbindungsstellen der einzelnen Würste in der Wurstkette gesteuert über die Steuerung getrennt werden.

Hinter den Trenneinrichtungen 3.1 und 3.2 sind jeweils eine Abführeinrichtung 4.1 bzw. 4.2 angeordnet, mittels der die separierten, einzelnen Wurstabschnitte bzw. Würste dem Auslauf 7.1 bzw. 7.2 zugeführt werden.

Die Abführeinrichtungen 4.1 und. 4.2 sind im Wesentlichen ähnlich ausgebildet, wie die Zuführeinrichtung 1.1 und 1.2. Die Abführeinrichtungen 4.1 und 4.2 weisen ebenfalls Umlenkrollen 15.1 bis 15.4 bzw. 15.1' bis 15.4' auf, um die entsprechende Transportbänder 16.3 bis 16.4 bzw. 16.3' bis 16.4' zum Weitertransportieren der einzelnen Wurstabschnitte bzw. Würste hin zu den Ausläufen 7.1, 7.2 umgelegt sind.

Ferner besitzt die Vorrichtung P eine Bedieneinrichtung 6, die einen Display 9 aufweist, der in einem Gehäuse 10 untergebracht ist. Über den Display kann beispielsweise die Durchführgeschwindigkeit der Wurstketten, die Abschnittslänge, in die die einzelnen Wurstketten getrennt werden sollen, für beide Trenneinrichtungen gleichzeitig oder einzeln für jede Trenneinrichtung programmiert, angezeigt und überwacht werden.

**Bezugszeichenliste**

| | | | | | |
|---|---|---|---|---|---|
| 1 | Zuführeinrichtung | 34 | | 67 | |
| 2 | Sensoreinrichtung | 35 | | 68 | |
| 3 | Trenneinrichtung | 36 | | 69 | |
| 4 | Abführeinrichtung | 37 | | 70 | |
| 5 | Bereitstelleinrichtung | 38 | | 71 | |
| 6 | Bedieneinrichtung | 39 | | 72 | |
| 7 | Auslauf | 40 | | 73 | |
| 8, 8' | Einlauf | 41 | | 74 | |
| 9 | Bediendisplay | 42 | | 75 | |
| 10 | Gehäuse | 43 | | 76 | |
| 11.3 | Seitenwand | 44 | | 77 | |
| 12 | Trennwand | 45 | | 78 | |
| 13 | Boden | 46 | | 79 | |
| 14.1-14.4 | Umlenkrollen | 47 | | | |
| 15.1-15.4 | Umlenkrollen | 48 | | | |
| 16.1-16.4 | Transportband | 49 | | | |
| 17.1-17.2 | Sensorbrücke | 50 | | | |
| 18.1-18.2 | Sensor | 51 | | | |
| 19.1-19.2 | Messerschlitz | 52 | | | |
| 20.1-20.2 | Trennmesser | 53 | | | |
| 21 | Gehäuse | 54 | | P | Vorrichtung |
| 22 | Gehäusedeckenwand | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung (P) zum Trennen von Wurstketten, die eine Zuführeinrichtung (1) zum Zuführen von Wurstketten aufweist, der eine Trenneinrichtung (3) zum Trennen der Wurstketten in einzelne Wurstkettenabschnitte bzw. Würste zugeordnet ist,
**dadurch gekennzeichnet,**
**dass** in der Vorrichtung (P) eine n-fache Anzahl von Trenneinrichtungen (3.1 bis 3.n) nebeneinander integriert ist, wobei n ≥2 ist und jede Trenneinrichtung (3.1 bis 3.n) mit einer Sensoreinrichtung (2.1 bis 2.n), die die Verbindungsstellen der Wurstketten detektiert, zum Trennen der Wurstketten an den detektierten Verbindungsstellen zusammenwirkt.

2. Vorrichtung nach Anspruch 1, **dadurch gekennzeichnet, dass** die Trenneinrichtungen (3.1 bis 3.n) nebeneinander angeordnet sind und zum parallelen/gleichzeitigen Trennen einer n-fachen Anzahl von Wurstketten ausgebildet sind.

3. Vorrichtung nach Anspruch 1 oder 2, **dadurch gekennzeichnet, dass** der n-fachen Anzahl von Trenneinrichtungen (3.1 bis 3.n) eine korrespondierende n-fache Anzahl von Bereitstelleinrichtungen (5.1 bis 5.n) zum Bereitstellen einer n-fachen Anzahl von Wurstketten zugeordnet ist.

4. Vorrichtung nach wenigstens einem der vorherigen Ansprüche, **dadurch gekennzeichnet**, die n-fache Anzahl von Trenneinrichtungen (3.1 bis 3.n) einen gemeinsamen Antrieb aufweist.

5. Vorrichtung nach wenigstens einem der vorherigen Ansprüche, **dadurch gekennzeichnet, dass** eine n-fache Anzahl von Sensoreinrichtungen (2.1 bis 2.n) und die n-fache Anzahl von Trenneinrichtungen (3) eine gemeinsame Steuerung aufweisen.

6. Vorrichtung nach wenigstens einem der vorherigen Ansprüche, **dadurch gekennzeichnet, dass** jeder Trenneinrichtung (3.1 bis 3.n) eine Abführeinrichtung (4.1 bis 4.n) zum Abführen der von den Wurstketten getrennten Wurstkettenabschnitte bzw. Würste nachgeschaltet ist.

7. Verfahren zum Trennen von Wurstketten in einer Vorrichtung nach wenigstens einem der Ansprüche 1 bis 6, **dadurch gekennzeichnet dass** eine n-fache Anzahl von Wurstketten von n-fachen Trenneinrichtungen (3.1 bis 3.n) gleichzeitig/parallel in separate Wurstketlenabschnitte bzw. Würste getrennt wird, wobei n ≥ 2 ist, wobei die Sensoreinrichtung jeweils die Position der Verbindungsstelle der einzelnen Würste In der Wurstkette detektiert und wobei in Abhängigkeit der Zuführgeschwindigkeit der Wurstkette und der detektierten Position der Verbindungsstelle die Trenneinrichtung derart gesteuert wird, dass die Wurstkette an der detektierten Verbindungsstelle getrennt wird

8. Verfahren nach Anspruch 7, **dadurch gekennzeichnet, dass** die n-fache Anzahl von Wurstketten mittels n-fachen Bereiteinstelleinrichtungen (5.1 bis 5.n) n-fach bereitgestellt wird.

9. Verfahren nach Anspruch 7 oder 8, **dadurch gekennzeichnet, dass** die n-fache Anzahl von Wurstketten mittels n-fachen Zuführeinrichtungen (1.1 bis 1.n) der n-fachen Anzahl von Trenneinrichtungen zugeführt wird.

10. Verfahren nach einem der Ansprüche 7 bis 9, **dadurch gekennzeichnet, dass** die Abschnittslänge der abzutrennenden Wurstkettenabschnitte für Jede Trenneinrichtung (3.1 bis 3.n) gleichzeitig/separat programmierbar ist.

## Claims

1. A device (P) for separating sausage chains, which has a supply means (1) for supplying sausage chains, with which a separating means (3) for separating the sausage chains into individual sausage-chain sections or sausages is associated,
**characterised in that**
an n-fold number of separating means (3.1 to 3.n) are integrated next to one another in the device (P), with n ≥ 2 and each separating means (3.1 to 3.n) cooperating with a sensor means (2.1 to 2.n) which detects the joining points of the sausage chains, for separating the sausage chains at the detected joining points.

2. A device according to Claim 1, **characterised in that** the separating means (3.1 to 3.n) are arranged next to one another and are designed for the parallel/simultaneous separation of an n-fold number of sausage chains.

3. A device according to Claim 1 or 2, **characterised in that** a corresponding n-fold number of provision means (5.1 to 5.n) for providing an n-fold number of sausage chains is associated with the n-fold number of separating means (3.1 to 3.n).

4. A device according to at least one of the preceding claims, **characterised in that** the n-fold number of separating means (3.1 to 3.n) has a common drive.

5. A device according to at least one of the preceding claims, **characterised in that** an n-fold number of sensor means (2.1 to 2.n) and the n-fold number of separating means (3) have a common control means.

6. A device according to at least one of the preceding claims, **characterised in that** each separating means (3.1 to 3.n) is succeeded by a discharge means (4.1 to 4.n) for discharging the sausage-chain sections or sausages which are separated from the sausage chains.

7. A method for separating sausage chains in a device according to at least one of Claims 1 to 6, **characterised in that** an n-fold number of sausage chains is separated simultaneously/in parallel into separate sausage-chain sections or sausages by n-fold separating means (3.1 to 3.n), with n ≥ 2, with the sensor means in each case detecting the position of the joining point of the individual sausages in the sausage chain, and with the separating means being controlled dependent on the rate of supply of the sausage chain and the detected position of the joining point such that the sausage chain is separated at the detected joining point.

8. A method according to Claim 7, **characterised in that** the n-times number of sausage chains is provided n-fold by means of n-fold provision means (5.1 to 5.n).

9. A method according to Claim 7 or 8, **characterised in that** the n-fold number of sausage chains is supplied by means of n-fold supply means (1.1 to 1.n) to the n-fold number of separating means.

10. A method according to at least one of the preceding Claims 7 to 9, **characterised in that** the section length of the sausage-chain sections which are to be separated are simultaneously/separately programmable for each separating means (3.1 to 3.n).

## Revendications

1. Dispositif (P) pour diviser des chapelets de saucisses, présentant un moyen d'alimentation (1) destiné à alimenter des chapelets de saucisses, auquel est associé un dispositif de division (3) destiné à diviser les chapelets de saucisses en segments de chapelet de saucisses ou saucisses individuels,
**caractérisé par le fait**
**que** dans le dispositif (P) sont intégrés l'un à côté de l'autre un nombre n de moyens de division (3.1 à 3.n), où n > 2, et chaque moyen de division (3.1 à 3.n) coopère avec un dispositif de détection (2.1 à 2.n) qui détecte les points de jonction des chapelets de saucisses, pour diviser les chapelets de saucisses aux points de jonction détectés.

2. Dispositif selon la revendication 1, **caractérisé par le fait que** les moyens de division (3.1 à 3.n) sont disposés l'un à côte de l'autre et sont réalisés pour diviser en parallèle/simultanément un nombre n de chapelets de saucisses.

3. Dispositif selon la revendication 1 ou 2, **caractérisé par le fait qu'**au nombre n de moyens de division (3.1 à 3.n) sont associés un nombre n correspondant de moyens de mise à disposition (5.1 à 5.n) destinés à mettre à disposition un nombre n de chapelets de saucisses.

4. Dispositif selon au moins l'une des revendications précédentes, **caractérisé par le fait que** le nombre n de moyens de division (3.1 à 3.n) présentent un entraînement commun.

5. Dispositif selon au moins l'une des revendications précédentes, **caractérisé par le fait qu'**un nombre n de dispositifs de détection (2.1 à 2.n) et le nombre n de moyens de division (3) présentent une commande commune.

6. Dispositif selon au moins l'une des revendications précédentes, **caractérisé par le fait qu'**après chaque moyen de division (3.1 à 3.n) est connecté un moyen d'évacuation (4.1 à 4.n) destiné à évacuer les segments de chapelet de saucisses ou saucisses séparés des chapelets de saucisses.

7. Procédé de division de chapelets de saucisses dans un dispositif selon au moins l'une des revendications 1 à 6, **caractérisé par** le qu'un nombre n de chapelets de saucisses sont divisés simultanément/en parallèle par n moyens de division (3.1 à 3.n) en segments de chapelet de saucisses ou saucisses séparés, où n > 2, le moyen de détection détectant chaque fois la position du point de jonction des saucisses individuelles dans le chapelet de saucisses et le moyen de division étant commandé, en fonction de la vitesse d'alimentation du chapelet de saucisses et de la position détectée du point de jonction, de sorte que le chapelet de saucisses soit divisé au point de jonction détectée

8. Procédé selon la revendication 7, **caractérisé par le fait que** le nombre n de chapelets de saucisses sont mis à disposition à l'aide de n moyens de mise à disposition (5.1 à 5.n).

9. Procédé selon la revendication 7 ou 8, **caractérisé par le fait que** le nombre n de de chapelets de saucisses sont alimentés par n moyens d'alimentation (1,1 à 1.n) vers le nombre n de moyens de division.

10. Procédé selon l'une des revendications 7 à 9, **caractérisé par le fait que** la longueur de segment des segments de chapelet de saucisses peut être programmée simultanément/séparément pour chaque moyen de division (3.1 à 3.n).
